# EUROPÄISCHE PATENTSCHRIFT

(11) **EP 2 150 792 B1**
(45) Veröffentlichungstag und Bekanntmachung des Hinweises auf die Patenterteilung: **22.05.2013**
(21) Anmeldenummer: 08758136.9
(22) Anmeldetag: 30.05.2008
(51) Int. Cl.: G01L 9/00, G01L 19/06

(54) **SENSOR**
SENSOR
CAPTEUR

(30) Priorität: 02.06.2007 DE 102007025836
(43) Veröffentlichungstag der Anmeldung: 10.02.2010
(73) Patentinhaber: Marquardt GmbH, 78604 Rietheim-Weilheim (DE)
(72) Erfinder: MÜLLER, Heinrich, 78532 Tuttlingen (DE); KAMPF, Florian, 78532 Tuttlingen (DE); HENTSCHEL, Alexander, 78655 Dunningen (DE)
(74) Vertreter: Otten, Herbert
(86) Internationale Anmeldenummer: PCT/DE2008/000896
(87) Internationale Veröffentlichungsnummer: WO 2008/148371

(56) Entgegenhaltungen:
- EP-A- 1 340 971
- WO-A-2007/140641
- DE-A1- 10 163 164
- US-A1- 2005 000 291
- US-A1- 2006 090 568

## Beschreibung

Die Erfindung betrifft eine Meßvorrichtung für ein zu messendes Medium nach dem Oberbegriff des Patentanspruchs 1.

Bei der Meßvorrichtung kann es sich um einen Sensor, wie einen Drucksensor, einen Wegsensor o. dgl., handeln. Solche Meßvorrichtungen dienen vor allem zur direkten Messung von Betriebsparametern in einem Fluid, beispielsweise in wasserführenden Teilen von Hausgeräten.

Es sind Meßvorrichtungen mit einem Gehäuse und mit einer im und/oder am Gehäuse angeordneten, mit dem Medium in Kontakt bringbaren Membran bekannt. Ein Signalgeber steht mit der Membran in Wirkverbindung. Mit dem Signalgeber wirkt ein Signalaufnehmer zur Erzeugung eines Meßsignals für das Medium zusammen. Es hat sich herausgestellt, daß die Gefahr der mechanischen Beschädigung der Membran durch im Fluid befindliche Partikel besteht. Besonders empfindlich ist die Membran eines Drucksensors für die Messung von geringen Drücken in verschmutzten Fluiden. Desweiteren ist die Membran einer Alterung durch Ablagerungen der im Fluid befindlichen Partikel ausgesetzt.

Zum Schutz der Membran der Meßvorrichtung ist es aus der US 2006/090568 A1 bekannt, daß die Membran von einer Abdeckung in der Art einer Abdeckkappe, die die Membran seitlich überragt, umgeben ist. Die Abdeckung ist an deren Oberseite mit Öffnungen in der Art von Löchern oder Durchbrüchen versehen, derart daß das umgebende Medium über die in der Abdeckung angebrachten Öffnungen mit der Membran direkt in Kontakt steht. Desweiteren ist in der US 2005/000291 A1 eine Meßvorrichtung beschrieben, bei der die Abdeckung der Membran eine seitliche röhrenförmige Zuleitung zur Zuführung des Mediums aufweist. Schließlich ist in der EP 1 340 971 A2 eine Meßvorrichtung gezeigt, bei der sich im Gehäuse ein Abscheider sowie eine Prallfläche zum Zurückhalten von Verunreinigungen des Mediums befinden.

Der Erfindung liegt die Aufgabe zugrunde, die Meßvorrichtung derart auszugestalten, daß der Schutz der Membran vor solchen Beschädigungen und/oder Alterungen weiter verbessert ist.

Diese Aufgabe wird bei einer gattungsgemäßen Meßvorrichtung durch die kennzeichnenden Merkmale des Anspruchs 1 gelöst.

Bei der erfindungsgemäßen Meßvorrichtung ist die Membran wenigstens teilweise von einer Abdeckung, insbesondere in der Art einer Abdeckkappe, umgeben. Die Abdeckung ist mit wenigstens einer Öffnung, bevorzugterweise jedoch mit mehreren Öffnungen in der Art von Löchern, Durchbrüchen o. dgl., versehen, so daß das umgebende Medium über die in der Abdeckung angebrachte Öffnung mit der Membran direkt in Kontakt steht. Die siebartige Ausgestaltung der Abdeckung gestattet daher eine Weiterleitung des Fluiddrucks zur Membran, wobei jedoch störende Partikel in dem Medium zurückgehalten werden. Dabei überragt die Abdeckkappe die Membran seitlich. Öffnungen für die Weiterleitung des Fluiddrucks zur Membran sind unterhalb des Randes in der Abdeckkappe angeordnet, so daß die Oberfläche der Membran weitgehend abgedeckt und folglich geschützt ist. Der Rand der Abdeckkappe überragt die Seitenwände, in denen die Öffnungen befindlich sind, was den Schutz vor Eindringen von Fremdkörpern weiter verbessert.

Mit anderen Worten läßt sich auch feststellen, daß über der empfindlichen Membrane eine stabile Kappe angebracht ist, die die Membrane seitlich überragt und unterhalb des Randes Öffnungen zum Weiterleiten des Fluiddruckes zur Membran hat. Dadurch ist vorteilhafterweise ein wirksamer Schutz gegen mechanische Beschädigungen und Alterungen durch Verschmutzungen, Ablagerungen o. dgl. aus dem Fluid gegeben.

Die Erfindung stellt somit vorteilhafterweise eine beschädigungs- und/oder ablagerungsgeschützte Meßvorrichtung bereit, womit deren Funktionssicherheit sowie Lebensdauer gesteigert ist. Weitere Ausgestaltungen der Erfindung sind Gegenstand der Unteransprüche.

In einer einfachen und kostengünstigen Ausgestaltung ist der Signalgeber in der Art eines Stößels an der Membran angeordnet sowie ein Permanentmagnet am Stößel befestigt. Zweckmäßigerweise wirkt eine Feder, beispielsweise eine Blattfeder, auf den Stößel zur Rückstellung des Stößels und/oder der Membran ein. Der Signalaufnehmer kann aus einem mit dem Permanentmagnet zusammenwirkenden Hallsensor bestehen.

Das Gehäuse der Meßvorrichtung kann der einfachen Montierbarkeit halber in etwa zylinderförmig ausgestaltet sein, wobei wenigstens ein Absatz an der Mantelfläche des Zylinders angeordnet sein kann. Die Membran ist zweckmäßigerweise am Gehäuse an der Deckelfläche des Zylinders, und zwar an dem einen Ansatz aufgesteckt, angeordnet. Zum Schutz vor Eindringen des Fluids in das Gehäuseinnere besitzt das Gehäuse an der der Membran zugewandten Deckelfläche des Zylinders eine geschlossene Wandung. Zweckmäßigerweise besitzt die Wandung des Gehäuses eine der Membran abgewandte Ausbauchung, wobei der Stößel in die Ausbauchung hineinragt, so daß das Gehäuseinnere auch im Bereich des Signalgebers vor dem Eindringen des Fluids geschützt ist.

Zweckmäßigerweise dient eine Leiterplatte zur Aufnahme von elektrischen Bauteilen, wobei die spannungsführende Leiterplatte geschützt im Inneren des Gehäuses befindlich ist. Der Signalaufnehmer ist ebenfalls auf der Leiterplatte angeordnet, und zwar derart daß der Signalaufnehmer der Ausbauchung zugewandt ist. Der Effektivität für die Erzeugung des Meßsignals halber ist der Signalgeber an der dem Signalaufnehmer zugewandten Seite des Stößels angeordnet. Desweiteren bietet es sich an, daß ein aus dem Gehäuse herausragender Anschlußstecker für Zuleitungen an der Leiterplatte ansteckbar ist.

Eine einfache Montage der Meßvorrichtung ist dadurch geben, daß das Gehäuse in einem Durchlaß an einem das Fluid als Medium aufnehmenden Behälter eingebaut ist. Der Einbau erfolgt dabei derart, daß der die Abdeckung und/oder die Membran aufweisende Teil des Gehäuses in den Behälter hineinragt. Die Membran ist vorteilhafterweise im Behälter vollständig von der Abdeckung umgeben, derart daß das Medium lediglich über die Öffnung Zutritt zur Membran hat. Um eine sichere Abdichtung am Einbauort der Meßvorrichtung im Hausgerät zu gewährleisten, ist eine Dichtung für den Durchlaß an dem anderen Ansatz des Gehäuses angeordnet.

Zur einfachen Befestigung kann die Abdeckkappe verrastend am Gehäuse befestigt sein. In einer weiteren Ausgestaltung ist die Meßvorrichtung in einer vertieften Mulde des Behälters montiert, derart daß die Öffnungen in der Abdeckkappe unterhalb des Behälterbodens in der Mulde befindlich sind, womit der Zutritt von Fremdkörpern weiter erschwert ist. In nochmals einer weiteren Ausgestaltung sind im Behälter Fremdkörper abhaltende Abschirmrippen angebracht, die so weit zum Rand der Abdeckkappe hochgezogen sind, daß Gegenstände nicht seitlich durch die Öffnungen in der Abdeckkappe zur Membran dringen können. Die Abschirmrippen können radial um die Kappe Schlitze und/oder Unterbrechungen aufweisen, derart daß die Abschirmrippen nicht durchgängig geschlossen sind. In abermals weiterer Ausgestaltung sind Fremdkörper abhaltende Abschirimwände am Gehäuse der Meßvorrichtung, und zwar bevorzugterweise an der geschlossenen Wandung der Deckelfläche des Zylinders, angebracht, die so weit zum Rand der Abdeckkappe hochgezogen sind, daß Gegenstände nicht seitlich durch die Öffnungen in der Abdeckkappe zur Membran dringen können. In abermaliger weiterer Ausgestaltung ist die Abdeckkappe auf das Gehäuse aufsteckbar, wobei die aufgesteckte Abdeckkappe gleichzeitig zur Fixierung der Membran und/oder zur Abdichtung des Raumes unterhalb der Membran dient.

Diese weiteren Ausgestaltungen zeichnen sich auch durch nachfolgende Merkmale aus. In der erfindungsgemäßen Lösung überragt der Kappenrand die Seitenwände, in denen die Öffnungen zum Weiterleiten des Fluiddruckes sitzen. In Erweiterung der erfindungsgemäßen Lösung wird der Sensor in einer vertieften Mulde des Fluidbehälters montiert, so daß die Öffnungen zum Weiterleiten des Fluiddruckes unterhalb des Behälterbodens liegen. In Erweiterung der erfindungsgemäßen Lösung werden im Fluidbehälter Abschirmrippen angebracht, die so weit zum Kappenrand hochgezogen sind, daß Gegenstände nicht seitlich durch die Öffnungen in der Kappe zur Membran dringen können. In Erweiterung der erfindungsgemäßen Lösung werden diese Abschirmwände im Gehäuse des Sensors angebracht. In Erweiterung der erfindungsgemäßen Lösung sind die Abschirmrippen nicht durchgängig geschlossen, sondern haben radial um die Kappe Schlitze oder Unterbrechungen. In einer anderen Erweiterung der erfindungsgemäßen Lösung ist die Kappe auf dem Drucksensor aufsteckbar. In einer abermaligen Erweiterung der erfindungsgemäßen Lösung dient die aufgesteckte Kappe gleichzeitig zur Fixierung der Membrane und der Abdichtung des Raumes unterhalb der Membrane.

Empfindliche Drucksensoren für Fluide werden beispielsweise zur direkten Flüssigkeitspegelmessung, z.B. in Haushalt-Waschgeräten, wie Waschmaschinen und Geschirrspülern, eingesetzt. Dabei wirkt die Flüssigkeit auf eine flexible Membran, deren Bewegung im Sensor in ein elektrisches Ausgangssignal gewandelt wird. Wegen den sehr geringen Meßdrücken, den beengten Platzverhältnissen und den Kosten muß die Membran relativ klein und dabei sehr weich sein. Solche Membranen sind mechanisch sehr gegen Fremdkörper empfindlich, wie sie beispielsweise in Waschmaschinen öfter zwischen Trommel und Laugenbehälter gelangen können. Ein Loch in der Membran läßt Flüssigkeit ins Geräteinnere und zu den elektrischen Teilen gelangen, was unbedingt verhindert werden muß. Wegen der Einbaulage im tiefsten Punkt der Flüssigkeitsbehälter und den starken Verschmutzungen der Waschflüssigkeiten setzen sich ungeschützte Membranen schnell zu und die Meßgenauigkeit des Drucksensors gerät außerhalb der Toleranzen. Die mit der Erfindung erzielten Vorteile bestehen insbesondere darin, daß vorstehende Nachteile beseitigt werden.

Die an der Membran der Meßvorrichtung angebrachte Kappe schützt die Meßmembran gegen Fremdkörper und Niederschläge. Der Fluiddruck kann dabei durch die seitlichen Durchbrüche der Kappe ungehindert zur Membran gelangen. Gegen starre Fremdkörper, die seitlich durch die Kappenöffnungen zur Membran gelangen könnten, helfen die Abschirmrippen, die vom Gehäuse des Drucksensors oder an dem den Drucksensor aufnehmenden Teil des Flüssigkeitsbehälters so weit hochgezogen sind, daß die Fremdkörper nicht eindringen können. Um Ablagerungen nicht anzustauen und sie wieder abfließen zu lassen, sind die Abschirimwände mit Schlitzen versehen.

Die Erfindung stellt somit einen beschädigungs- und ablagerungsgeschützten Sensor bereit. Es handelt sich vorteilhafterweise um eine Low-Cost-Lösung für Sensoren zur Pegelmessung in schmutz- und/oder fremdkörperbelasteten Flüssigkeiten, beispielsweise in Waschmaschinen und Geschirrspülern, womit die Erfindung besonders zur Anwendung bei kostensensitiven Haushaltsgeräten geeignet ist.

Ausführungsbeispiele der Erfindung mit verschiedenen Weiterbildungen und Ausgestaltungen sind in den Fig. 2-6 dargestellt und werden im folgenden näher beschrieben. Es zeigen
- Fig. 1: einen Querschnitt durch einen Drucksensor für ein Hausgerät,
- Fig. 2: einen Querschnitt durch einen Drucksensor gemäß einer Ausführung,
- Fig. 3: einen Querschnitt durch einen Drucksensor gemäß einer weiteren Ausführung,
- Fig. 4: eine Draufsicht auf den Drucksensor aus Fig. 3 in Richtung IV,
- Fig. 5: einen Querschnitt entlang der Linie 5-5 in Fig. 6 durch einen Drucksensor gemäß einer abermals weiteren Ausführung und
- Fig. 6: einen Schnitt entlang der Linie 6-6 in Fig. 5.

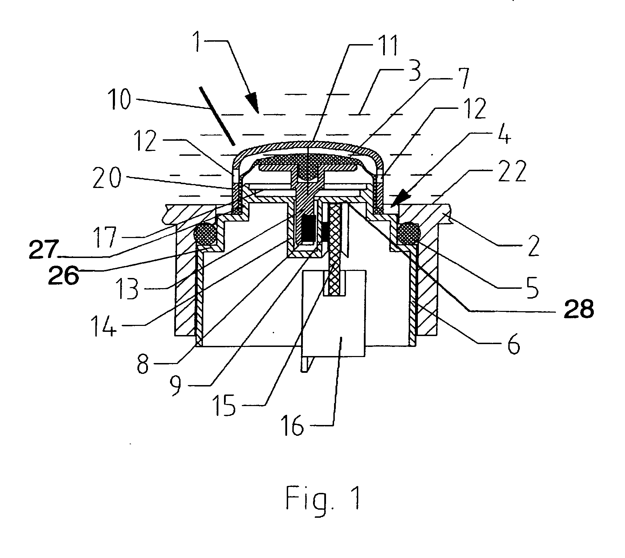

In Fig.1 ist eine Meßvorrichtung 1 für ein zu messendes Medium zu sehen. Bei der Meßvorrichtung 1 handelt es sich um einen Drucksensor für die im als Behälter 2 ausgestalteten Waschbottich einer Waschmaschine befindliche, lediglich schematisch angedeutete Waschflüssigkeit als Fluid 3, wobei die Waschflüssigkeit 3 das zu messende Medium darstellt. Die Meßvorrichtung 1 ist mittels einer Dichtung 5 abgedichtet in einem Durchlaß 4 des Waschbottiches 2 derart eingesetzt, daß die Meßvorrichtung 1 in die im Waschbottich 2 befindliche Waschflüssigkeit 3 hineinragt.

Die Meßvorrichtung 1 besitzt ein Gehäuse 6, wobei im und/oder am Gehäuse 6 eine mit der Waschflüssigkeit 3 in Kontakt stehende Membran 7 angeordnet ist. Mit der Membran 7 steht ein Signalgeber 8, bei dem es sich um einen Permanentmagneten handeln kann, in Wirkverbindung. Im Gehäuse 6 befindet sich ein mit dem Signalgeber 8 in Zusammenwirkung stehender Signalaufnehmer 9, bei dem es sich beispielsweise um einen Hallsensor handelt. Der Signalaufnehmer 9 erzeugt ein zur Stellung des Signalgebers 8, die entsprechend der Auslenkung der Membran 7 aufgrund des in der Waschflüssigkeit 3 herrschenden Drucks eingenommen wird, korrespondierendes Meßsignal, aus dem wiederum der in der Waschflüssigkeit 3 herrschende Druck ermittelbar ist.

In der Waschflüssigkeit 3 befinden sich Fremdkörper 10, Ablagerungen, Gegenstände o. dgl., die vom Waschvorgang herrühren. Um die empfindliche Membran 7 vor dadurch hervorgerufenen Beschädigungen zu schützen, ist die Membran 7 wenigstens teilweise von einer Abdeckung 11, die in der Art einer Abdeckkappe ausgebildet sein kann, umgeben. Damit ragt der Teil des Gehäuses 6, der die Abdeckung 11 und/oder die Membran 7 aufweist, mitsamt der Abdeckung 11 und/oder der Membran 7 in die Waschflüssigkeit 3 im Waschbottich 2 hinein, wobei die empfindliche Membran 7 von der Abdeckung 11 geschützt ist. Die Abdeckung 11 ist jedoch mit wenigstens einer Öffnung 12 zur Weiterleitung des Fluiddrucks versehen. Bevorzugterweise ist die Abdeckung 11 allerdings mit mehreren Öffnungen 12 in der Art von Löchern, Durchbrüchen o. dgl., versehen, wie in Fig. 1 gezeigt ist. Aufgrund dieser siebartigen Ausgestaltung steht die Waschflüssigkeit 3 als das umgebende Medium über die in der Abdeckung 11 angebrachte Öffnung 12 mit der Membran 7 direkt in Kontakt, während jedoch der schädliche Zutritt von Fremdkörpern 10 zur Membran 7 wirksam verhindert ist.

Das Gehäuse 6 ist in etwa zylinderförmig ausgestaltet, wobei die Mantelfläche des Zylinders zwei Absätze 26, 27 aufweist. Die Membran 7 ist am Gehäuse 6 an der Deckelfläche des Zylinders am Ansatz 27 aufgesteckt angeordnet. Das Gehäuse 6 besitzt an der der Membran 7 zugewandten Deckelfläche des Zylinders eine geschlossene Wandung 28, womit das Innere des Gehäuses 6 weitgehend abgedichtet ist. Die Dichtung 5 ist am Ansatz 26 des Gehäuses 6 angeordnet.

Der aus einem Permanentmagneten bestehende Signalgeber 8 ist mittels eines Art von Stößels 13 an der Membran 7 befestigt, indem die Membran 7 am Stößel 13 angesteckt ist. Falls gewünscht, kann der Stößel 13 auch einstückig mit der Membran 7 ausgebildet sein, was jedoch nicht weiter gezeigt ist. Auf den Stößel 13 wirkt eine am Gehäuse 6 befestigte, als Blattfeder 17 ausgebildete Feder zur Rückstellung des Stößels 13 mitsamt der Membran 7 ein. Die Wandung 28 des Gehäuses 6 besitzt eine der Membran 7 abgewandte Ausbauchung 14. Der Stößel 13 mitsamt dem Signalgeber 8 reicht dabei in die Ausbauchung 14 am Gehäuse 6 hinein.

Der Signalaufnehmer 9 ist in der Nähe der Ausbauchung 14 auf einer Leiterplatte 15 angeordnet, und zwar so daß der Signalgeber 8 dem Signalaufnehmer 9 zugewandt ist. Die Spannungszuführung zum Signalaufnehmer 9 erfolgt in bekannter Weise durch Leiterbahnen auf der Leiterplatte 15. Mit der Leiterplatte 15 steht ein aus dem Gehäuse 6 herausragender Steckanschluß 16 für die elektrischen Zuleitungen zur Meßvorrichtung 1 in Verbindung, und zwar indem der Anschlußstecker 16 an der Leiterplatte 15 ansteckbar ist.

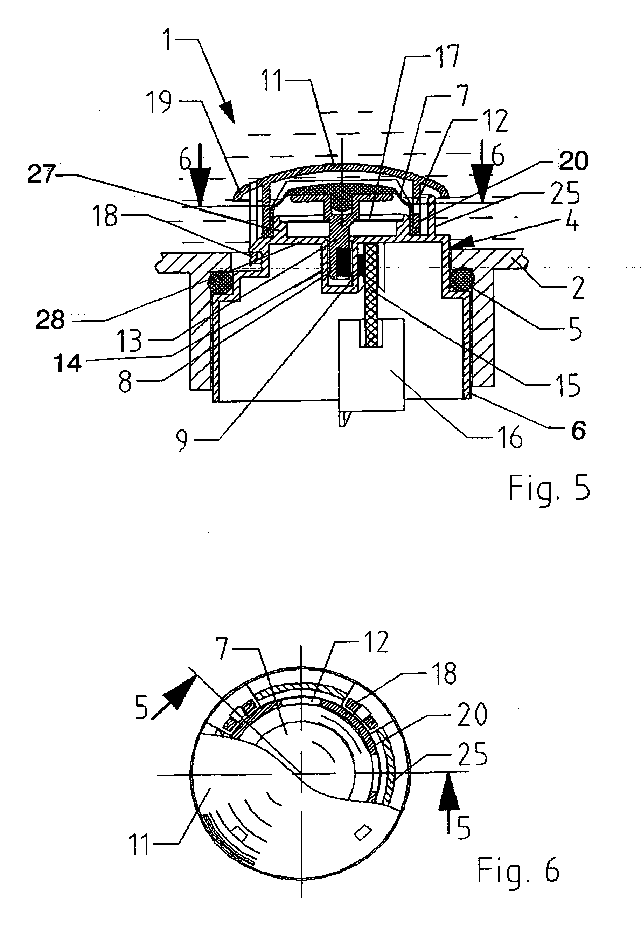

Die Abdeckkappe 11 ist mittels eines in Fig. 5 sichtbaren Rasthakens 18 verrastend am Gehäuse 6 befestigt und überragt die Membran 7 seitlich, womit die Membran 7 vollumfänglich geschützt ist. Die Öffnungen 12 sind unterhalb des Randes in der Abdeckkappe 11 angeordnet, so daß die Frontfläche der Membran 7 vollständig von der Abdeckkappe 11 abgedeckt ist. Dadurch ist die Membran 7 im Behälter 2 vollständig von der Abdeckung 11 umgeben, wobei die Waschflüssigkeit 3 lediglich über die Öffnungen 12 Zutritt zur Membran 7 hat.

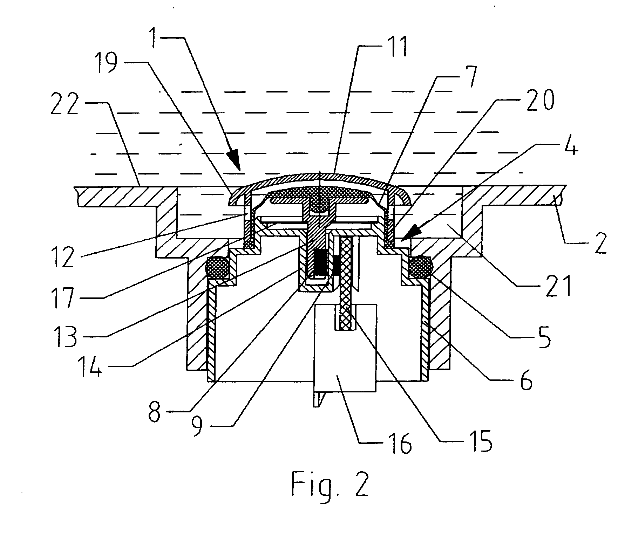

In einer Ausführung, die in Fig. 2 zu sehen ist, überragt der Rand 19 der Abdeckkappe 11 die Seitenwände 20, in denen die Öffnungen 12 befindlich sind. Dadurch wird eine Verstärkung der Schutzwirkung durch die Abdeckkappe 11 bewirkt. Der Sensor 1 ist in einer vertieften Mulde 21 des Behälters 2 montiert, derart daß die Öffnungen 12 in der Abdeckkappe 11 unterhalb des Behälterbodens 22 in der Mulde 21 liegen.

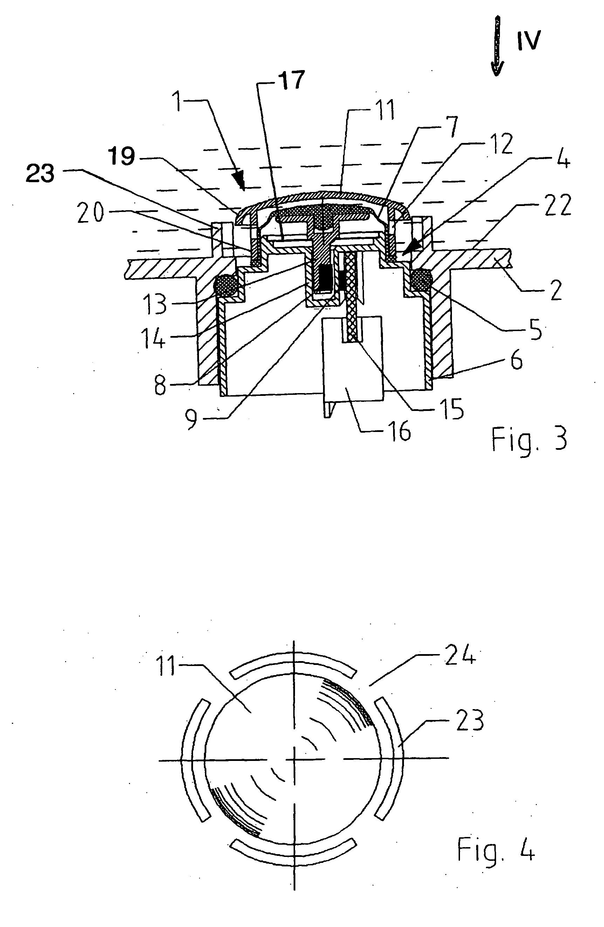

Wie näher aus Fig. 3 hervorgeht, können im Behälter 2 Abschirmrippen 23 angebracht sein. Die Abschirmrippen 23 sind so weit zum Rand 19 der Abdeckkappe 11 hochgezogen, daß in der Waschflüssigkeit 3 befindliche Gegenstände nicht seitlich durch die Öffnungen 12 in der Abdeckkappe 11 zur Membran 7 dringen können. Die Abschirmrippen 23 sind nicht durchgängig geschlossen, sondern weisen radial um die Abdeckkappe 11 Schlitze 24 und/oder Unterbrechungen auf, wie der Fig. 4 zu entnehmen ist, damit eventuelle Ablagerungen nicht angestaut werden.

Gemäß Fig. 5 und Fig. 6 sind Abschirmwände 25 am und/oder im Gehäuse 6 des Sensors 1, und zwar an der Wandung 28 angebracht. Die Abschirmwände 25 sind so weit zum Rand 19 der Abdeckkappe 11 hochgezogen, daß Gegenstände nicht seitlich durch die Öffnungen 12 in der Abdeckkappe 11 zur Membran 7 dringen können. Die Abdeckkappe 11 ist am Ansatz 27 auf das Gehäuse 6 aufsteckbar. Die aufgesteckte Abdeckkappe 11 dient gleichzeitig zur Fixierung der Membran 7 und/oder zur Abdichtung des Raumes unterhalb der Membran 7, wie man anhand der Fig. 5 erkennt.

Die Erfindung ist nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. So kann ein solcher Drucksensor 1 auch an sonstigen Hausgeräten, beispielsweise einer Geschirrspülmaschine, Verwendung finden. Im übrigen kann ein solcher Drucksensor 1 nicht nur für Hausgeräte sondern auch in sonstigen Anwendungen, beispielsweise zur Pegelmessung in der chemischen Verfahrenstechnik eingesetzt werden.

### Bezugszeichen-Liste:

| | |
|---|---|
| 1: | Meßvorrichtung / Drucksensor / Sensor |
| 2: | Waschbottich / Behälter |
| 3: | Waschflüssigkeit / Fluid |
| 4: | Durchlaß (im Waschbottich) |
| 5: | Dichtung |
| 6: | Gehäuse |
| 7: | Membran |
| 8: | Signalgeber |
| 9: | Signalaufnehmer |
| 10: | Fremdkörper |
| 11: | Abdeckung / Abdeckkappe |
| 12: | Öffnung (in Abdeckung) |
| 13: | Stößel |
| 14: | Ausbauchung |
| 15: | Leiterplatte |
| 16: | Steckanschluß / Anschlußstecker |
| 17: | Blattfeder |
| 18: | Rasthaken |
| 19: | Rand (an Abdeckkappe) |
| 20: | Seitenwand (von Abdeckkappe) |
| 21: | Mulde |
| 22: | Behälterboden |
| 23: | Abschirmrippe |
| 24: | Schlitz (in Abschirmrippe) |
| 25: | Abschirmwand |
| 26,27: | Absatz (am Gehäuse) |
| 28: | (geschlossene) Wandung (von Gehäuse) |

## Patentansprüche

1. Meßvorrichtung für ein zu messendes Medium, wie Drucksensor oder Wegsensor, mit einem Gehäuse (6), und mit einer im und/oder am Gehäuse (6) angeordneten, mit dem Medium in Kontakt bringbaren Membran (7), wobei ein Signalgeber (8) mit der Membran (7) in Wirkverbindung steht, wobei ein Signalaufnehmer (9) mit dem Signalgeber (8) zur Erzeugung eines Meßsignals für das Medium zusammenwirkt, wobei die Membran (7) von einer die Membran (7) seitlich überragenden Abdeckung (11) umgeben ist, wobei die Abdeckung (11) als eine einen Rand (19) sowie eine Seitenwand (20) aufweisende Abdeckkappe ausgestaltet ist, und wobei die Abdeckung (11) mit wenigstens einer Öffnung (12) in der Art von Löchern oder Durchbrüchen versehen ist, derart daß das umgebende Medium über die in der Abdeckung (11) angebrachte Öffnung (12) mit der Membran (7) direkt in Kontakt steht, **dadurch gekennzeichnet, daß** der Rand (19) der Abdeckkappe (11) die Seitenwand (20) überragt, und daß die Öffnung (12) unterhalb des Randes (19) in der Seitenwand (20) der Abdeckkappe (11) angeordnet ist.

2. Meßvorrichtung nach Anspruch 1, **dadurch gekennzeichnet, daß** der Signalgeber (8) in der Art eines Stößels (13) an der Membran (7) befestigt ist, daß ein Permanentmagnet am Stößel (13) befestigt ist, daß eine Feder (17) auf den Stößel (13) zur Rückstellung des Stößels (13) und/oder der Membran (7) einwirkt, und daß der Signalaufnehmer (9) aus einem mit dem Permanentmagnet zusammenwirkenden Hallsensor besteht.

3. Meßvorrichtung nach Anspruch 1 oder 2, **dadurch gekennzeichnet, daß** das Gehäuse (6) in etwa zylinderfförmig mit wenigstens einem Absatz (26, 27) an der Mantelfläche des Zylinders ausgestaltet ist, und daß die Membran (7) am Gehäuse (6) an der Deckelfläche des Zylinders am Ansatz (27) aufgesteckt angeordnet ist.

4. Meßvorrichtung nach Anspruch 3, **dadurch gekennzeichnet, daß** das Gehäuse (6) an der der Membran (7) zugewandten Dockelfläche des Zylinders eine geschlossene Wandung (28) besitzt, und daß die Wandung (28) des Gehäuses (6) eine der Membran (7) abgewandte Ausbauchung (14) besitzt, wobei der Stößel (13) in die Ausbauchung (14) hineinragt.

5. Meßvorrichtung nach einem der Ansprüche 2 bis 4, **dadurch gekennzeichnet, daß** eine Leiterplatte (15) im Inneren des Gehäuses (6) befindlich ist, daß der Signalaufnehmer (9) derart auf der Leiterplatte (15) angeordnet ist, daß der Signalaufnehmer (9) der Ausbauchung (14) zugewandt ist, und daß der Signalgeber (8) an der dem Signalaufinehrner (9) zugewandten Seite des Stößels (13) angeordnet ist.

6. Meßvorrichtung Anspruch 5, **dadurch gekennzeichnet, daß** ein aus dem Gehäuse (6) herausragender Anschlußstecker (16) für Zuleitungen an der Leiterplatte (15) ansteckbar ist.

7. Meßvorrichtung nach einem der Ansprüche 1 bis 6, **dadurch gekennzeichnet, daß** das Gehäuse (6) derart in einem Durchlaß (4) an einem ein Fluid (3) als Medium aufnehmenden Behälter (2) eingebaut ist, daß der die Abdeckung (11) und/oder die Membran (7) aufweisende Teil des Gehäuses (6) in den Behälter (2) hineinragt, daß die Membran (7) im Behälter (2) vollständig von der Abdeckung (11) umgeben ist, derart daß das Medium lediglich über die Öffnung (12) Zutritt zur Membran (7) hat, und daß eine Dichtung (5) für den Durchlaß (4) am Ansatz (26) des Gehäuses (6) angeordnet ist.

8. Meßvorrichtung nach einem der Ansprüche 1 bis 7, **dadurch gekennzeichnet, daß** die Abdeckkappe (11) verrastend am Gehäuse (6) befestigt ist.

9. Meßvorrichtung nach einem der Ansprüche 1 bis 8, **dadurch gekennzeichnet, daß** der Sensor (1) in einer vertieften Mulde (21) des Behälters (2) montiert ist, derart daß die Öffnungen (12) in der Abdeckkappe (11) unterhalb des Behälterbodens (22) in der Mulde (21) befindlich sind.

10. Meßvorrichtung nach einem der Ansprüche 1 bis 9, **dadurch gekennzeichnet, daß** im Behälter (2) Abschirmrippen (23) angebracht sind, die so weit zum Rand (19) der Abdeckkappe (11) hochgezogen sind, daß Gegenstände nicht seitlich durch die Öffnungen (12) in der Abdeckkappe (11) zur Membran (7) dringen können, und/oder daß Abschirimwände (25) an der Wandung (28) am Gehäuse (6) des Sensors (1) angebracht sind, die so weit zum Rand (19) der Abdeckkappe (11) hochgezogen sind, daß Gegenstände nicht seitlich durch die Öffnungen (12) in der Abdeckkappe (11) zur Membran (7) dringen können.

11. Meßvorrichtung nach Anspruch 10, **dadurch gekennzeichnet, daß** die Abschirmrippen (23) radial um die Abdeckkappe (11) Schlitze (24) und/oder Unterbrechungen aufweisen.

12. Meßvorrichtung nach einem der Ansprüche 1 bis 11, **dadurch gekennzeichnet, daß** die Abdeckkappe (11) auf das Gehäuse (6) aufsteckbar ist, und daß die aufgesteckte Abdeckkappe (11) gleichzeitig zur Fixierung der Membran (7) und/oder zur Abdichtung des Raumes unterhalb der Membran (7) dient.

## Claims

1. Device for measuring a medium to be measured, such as a pressure or displacement sensor with a housing (6), and with a membrane (7) arranged in and/or on the housing (6) that can be brought into contact with the medium, whereby a signal generator (8) is in operative connection with the membrane (7), whereby a sensor (9) interacts with the signal generator (8) to generate a measuring signal for the medium, whereby the membrane (7) is surrounded by a cover (11) that protrudes laterally beyond the membrane (7), whereby the cover (11) is formed as a cap having an edge (19) and a lateral wall (20), and whereby the cover (11) includes at least one opening (12) in the form of holes or perforations, such that the surrounding medium is in direct contact with the membrane (7) via the opening (12) in the cover (11), **characterised in that** the the edge (19) of the cap (11) protrudes beyond the lateral wall (20), and the opening (12) is arranged in the lateral wall (20) of the cap (11), below its edge (19).

2. Measuring device according to claim 1, **characterised in that** the signal generator (8) is fastened to the membrane (7) in slide (13) fashion, that a permanent magnet is fastened to the slide (13), that a spring (17) affects the slide (13) to push back the slide (13) and/or the membrane (7), and that the sensor (9) consists of a Hall sensor interacting with the permanent magnet.

3. Measuring device according to claim 1 or 2, **characterised in that** the housing (6) is approximately cylindrical with at least one ledge (26, 27) on the lateral surface of the cylinder, and that the membrane (7) is arranged on the housing (6), attached to the cover surface of the cylinder on the hub (27).

4. Measuring device according to Claim 3, **characterised in that** the housing (6) has a closed wall (28) on the cover surface of the cylinder facing the membrane (7), and that the wall (28) of the housing (6) has a bulge (14) facing away from the membrane (7), whereby the slide (13) protrudes into the bulge (14).

5. Measuring device according to any of claims 2 - 4, **characterised in that** there is a circuit board (15) inside the housing (6), that the sensor (9) is arranged on the circuit board (15) such that the sensor (9) faces the bulge (14), and that the signal generator (8) is arranged on the side of the slide (13) facing the sensor (9).

6. Measuring device according to claim 5, **characterised in that** a connector (16) for supply lines protruding out of the housing (6) can be attached to the circuit board (15).

7. Measuring device according to any of claims 1 - 6, **characterised in that** the housing (6) is installed in a passage (4) on a container (2) for receiving a fluid (3) as a medium such that the part of the housing (6) having the cover (11) and/or the membrane (7) protrudes into the container (2), that the membrane (7) in the container (2) is completely surrounded by the cover (11), such that the medium has access to the membrane (7) only via the opening (12), and that a gasket (5) for the passage (4) is arranged on the ledge (26) of the housing (6).

8. Measuring device according to any of claims 1 - 7, **characterised in that** the cap (11) is locked on the housing (6).

9. Measuring device according to any of claims 1 - 8, **characterised in that** the sensor (1) is mounted in a depression (21) of the container (2), such that the openings (12) are in the cap (11) under the bottom of the container (22) in the depression (21).

10. Measuring device according to any of claims 1 - 9, **characterised in that** protective ribs (23) extending so far in the direction of the edge (18) of the cap (11) that objects cannot reach the membrane (7) laterally via the openings (12) in the cap (11) are attached to the container (2), and/or that shielding walls (25) are attached to the wall (28) on the housing (6) of the sensor (1), extending so far to the edge (19) of the cap (11) that objects cannot reach the membrane (7) laterally via the openings (12) in the cap (11).

11. Measuring device according to claim 10, **characterised in that** the protective ribs (23) have slits (24) and/or interruptions radially around the cap (11).

12. Measuring device according to any of claims 1 - 11, **characterised in that** the cap (11) can be attached to the housing (6) and that the attached cap (11) simultaneously serves to affix the membrane (7) and/or to seal the space below the membrane (7).

## Revendications

1. Dispositif de mesure pour un milieu à mesurer, tel qu'un capteur de pression ou un capteur de position, comportant un boîtier (6) et une membrane (7), disposée dans et/ou contre le boîtier (6) et pouvant être mise en contact avec le milieu, un émetteur de signaux (8) étant en liaison active avec la membrane (7), un capteur de signaux (9) coopérant avec l'émetteur de signaux (8) pour produire un signal de mesure pour le milieu, la membrane (7) étant entourée d'un recouvrement (11) dépassant latéralement de la membrane (7), le recouvrement (11) étant configuré comme un capot de recouvrement présentant un bord (19) ainsi qu'une paroi latérale (20), et le recouvrement (11) étant pourvu d'au moins une ouverture (12) sous forme de trous ou de traversées, de telle sorte que le milieu environnant soit directement en contact avec la membrane (7) par l'ouverture (12) aménagée dans le recouvrement (11), **caractérisé en ce que** le bord (19) du capot de recouvrement (11) dépasse de la paroi latérale (20), et que l'ouverture (12) est disposée en-dessous du bord (19) dans la paroi latérale (20) du capot de recouvrement (11).

2. Dispositif de mesure selon la revendication 1, **caractérisé en ce que** l'émetteur de signaux (8) est fixé à la manière d'un poussoir (13) à la membrane (7), qu'un aimant permanent est fixé au poussoir (13), qu'un ressort (17) agit sur le poussoir (13) pour le rappel du poussoir (13) et/ou de la membrane (7), et que le capteur de signaux (9) est constitué d'un capteur à effet Hall, coopérant avec l'aimant permanent.

3. Dispositif de mesure selon la revendication 1 ou 2, **caractérisé en ce que** le boîtier (6) est configuré d'une manière approximativement cylindrique avec au moins un retrait (26, 27) contre la surface latérale du cylindre, et que la membrane (7) est disposée montée contre le boîtier (6) sur la surface formant couvercle du cylindre sur la saillie (27).

4. Dispositif de mesure selon la revendication 3, **caractérisé en ce que** le boîtier (6) possède, sur la surface du couvercle du cylindre dirigée vers la membrane (7), une paroi fermée (28), et que la paroi (28) du boîtier (6) possède un évasement (14) opposé à la membrane (7), le poussoir (13) dépassant vers l'intérieur de l'évasement (14).

5. Dispositif de mesure selon l'une des revendications 2 à 4, **caractérisé en ce qu'**une plaquette de circuits imprimés (15) se trouve à l'intérieur du boîtier (6), que le capteur de signaux (9) est disposé sur la plaquette de circuits imprimés (15) de telle sorte que le capteur de signaux (9) soit dirigé vers l'évasement (14), et que l'émetteur de signaux (8) est disposé contre le côté du poussoir (13) dirigé vers le capteur de signaux (9).

6. Dispositif de mesure selon la revendication 5, **caractérisé en ce qu'**une fiche de raccordement (16), dépassant du boîtier (6), peut être fixée pour des câbles d'alimentation de la plaquette de circuits imprimés (15).

7. Dispositif de mesure selon l'une des revendications 1 à 6, **caractérisé en ce que** le boîtier (6) est monté dans un passage (4) aménagé dans un récipient (2) recevant un fluide (3) en tant que milieu, de telle sorte que la partie du boîtier (6) comportant le recouvrement (11) et/ou la membrane (7) dépasse vers l'intérieur du récipient (2), que la membrane (7) soit dans le récipient (2) entièrement entourée du recouvrement (11), de telle sorte que le milieu ne puisse accéder à la membrane (7) que par l'ouverture (12), et qu'une étanchéité (5) est disposée pour le passage (4) au niveau de la saillie (26) du boîtier (6).

8. Dispositif de mesure selon l'une des revendications 1 à 7, **caractérisé en ce que** le capot de recouvrement (11) est fixé au boîtier (6) avec enclenchement.

9. Dispositif de mesure selon l'une des revendications 1 à 8, **caractérisé en ce que** le capteur (1) est monté dans une cavité (21) en renfoncement du récipient (2), de telle sorte que les ouvertures (12) aménagées dans le capot de couverture (11) en-dessous du fond (22) du récipient se trouvent dans la cavité (21).

10. Dispositif de mesure selon l'une des revendications 1 à 9, **caractérisé en ce que** des nervures de blindage (23) sont disposées dans le récipient (2), nervures qui sont relevées vers le bord (19) du capot de recouvrement (11) suffisamment pour que des objets ne puissent pénétrer latéralement jusqu'à la membrane (7) par les ouvertures (12) aménagées dans le capot de recouvrement (11) et/ou que des parois de blindage (25) sont rapportées contre la paroi (28) du boîtier (6) du capteur (1), qui sont relevées vers le bord (19) du capot de recouvrement (11) suffisamment pour que des objets ne puissent pénétrer latéralement jusqu'à la membrane (7) par les ouvertures (12) aménagées dans le capot de recouvrement (11).

11. Dispositif de mesure selon la revendication 10, **caractérisé en ce que** les nervures de blindage (23) comprennent, radialement autour du capot de recouvrement (11), des fentes (24) et/ou des interruptions.

12. Dispositif de mesure selon l'une des revendications 1 à 11, **caractérisé en ce que** le capot de recouvrement (11) peut être monté sur le boîtier (6), et que le capot de recouvrement (11) ainsi monté sert simultanément à la fixation de la membrane (7) et/ou à l'étanchéification de l'espace situé en-dessous de la membrane (7).
